# EUROPEAN PATENT APPLICATION

(11) **EP 4 525 552 A1**
(43) Date of publication of application: **19.03.2025**
(21) Application number: 22941747.2
(22) Date of filing: 13.05.2022
(51) Int. Cl.: H04W 80/10, H04W 12/08

(54) **NETWORK NODE AND COMMUNICATION METHOD**

(71) Applicant: NTT DOCOMO, INC., Tokyo 100-6150 (JP)
(72) Inventor: MINOKUCHI, Atsushi, Tokyo 100-6150 (JP); TOMINAGA, Takeshi, Tokyo 100-6150 (JP); SAWADA, Masahiro, Tokyo 100-6150 (JP)
(74) Representative: Hoffmann Eitle
(86) International application number: PCT/JP2022/020295
(87) International publication number: WO 2023/218671

(57) **Abstract**

A network node includes: a reception unit configured to receive, when a PDU session is established, a request of subscription to a function for notifying of occurrence of an event that registers a network node accommodating the PDU session, from another network mode; and a transmission unit configured to transmit a notification indicating occurrence of the event to the other network node, when the event that registers a network node accommodating the PDU session occurs.

## Description

### Technical Field

The present invention relates to a network node and a communication method in a radio communication system.

### Background Art

In New Radio (NR) (also referred to as "5G"), which is a successor system of long term evolution (LTE), a network architecture including 5GC (5G Core Network) corresponding to EPC (Evolved Packet Core), which is a core network in LTE (Long Term Evolution), and NG-RAN (Next Generation-Radio Access Network) corresponding to E-UTRAN (Evolved Universal Terrestrial Radio Access Network), which is RAN (Radio Access Network) in the LTE network architecture, is under study (for example, Non-Patent Document 1 and Non-Patent Document 2).

In addition, in a future system such as 6G, a mechanism for realizing a terminal shared by a plurality of users is being studied. For example, a scenario is assumed in which, when a person approaches a shared terminal on a street corner, an application server used by the person transmits application data to the terminal.

### Prior Art Document

### Non-Patent Document

Non-Patent Document 1: 3GPP TS 23.501 V17.2.0 (2021-09)
Non-Patent Document 2: 3GPP TS 23.502 V17.2.1 (2021-09)

### SUMMARY OF THE INVENTION

### Problems to be Solved by the Invention

Conventionally, an authentication device or the like detects that a person approaches a shared terminal, and notifies an AF (for example, an application server) of the approach. The AF transmits data of the AF to the shared terminal. A mechanism for charging according to the amount of use data of the AF has been studied. However, there is a problem that exclusive control by identified users cannot be performed, and for example, another application server of another person can simultaneously transmit other application data to the terminal.

The present invention has been made in view of the above, and it is an object of the present invention to realize appropriate exclusive control in a terminal shared by a plurality of users in a radio communication system.

### Means for Solving the Problems

According to the disclosed technology, there is provided a network node including:
a reception unit configured to receive, when a PDU session is established, a request of subscription to a function for notifying of occurrence of an event that registers a network node accommodating the PDU session from another network mode; and
a transmission unit configured to transmit a notification indicating occurrence of the event to the other network node when the event that registers a network node accommodating the PDU session.

### Effects of the Invention

According to the disclosed technology, technology is provided that enables appropriate exclusive control to be realized in a terminal shared by a plurality of users in a radio communication system.

### Brief Description of the Drawings

[FIG. 1] FIG. 1 is a diagram for explaining a radio communication system according to an embodiment of the present invention;
[FIG. 2] FIG. 2 is a diagram showing an example of a configuration of a radio communication system according to an embodiment of the present invention;
[FIG. 3] FIG. 3 is a sequence diagram showing an example of a flow of a preparation procedure of a terminal according to an embodiment of the present invention;
[FIG. 4] FIG. 4 is a first sequence diagram showing an example of a flow of a data transmission procedure according to an embodiment of the present invention;
[FIG. 5] FIG. 5 is a second sequence diagram showing an example of a flow of a data transmission procedure according to an embodiment of the present invention;
[FIG. 6] FIG. 6 is a third sequence diagram showing an example of a flow of a data transmission procedure according to an embodiment of the present invention;
[FIG. 7] FIG. 7 is a fourth sequence diagram showing an example of a flow of a data transmission procedure according to an embodiment of the present invention;
[FIG. 8] FIG. 8 is a sequence diagram showing an example of a flow of a data transmission end procedure according to an embodiment of the present invention;
[FIG. 9] FIG. 9 is a diagram showing an example of a functional configuration of a base station according to an embodiment of the present invention;
[FIG. 10] FIG. 10 is a diagram showing an example of a functional configuration of a terminal according to an embodiment of the present invention;
[FIG. 11] FIG. 11 is a diagram showing an example of a hardware configuration of a base station or a terminal according to an embodiment of the present invention; and
[FIG. 12] FIG. 12 is a diagram showing an example of a configuration of a vehicle according to an embodiment of the present invention.

### Detailed Description of the Invention

Hereinafter, an embodiment of the present invention will be described with reference to the drawings. The embodiment described below is an example, and the embodiment to which the present invention is applied is not limited to the following embodiment.

In the operation of the radio communication system according to the embodiment of the present invention, existing technology may be used as appropriate. The existing technology is, for example, existing NR or LTE, but is not limited to existing NR or LTE. In addition, the term "LTE" used in the present specification has a broad meaning including LTE-Advanced and schemes (example: NR) subsequent to LTE-Advanced unless otherwise specified.

In addition, in the embodiment of the present invention described below, terms such as a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), and a physical uplink shared channel (PUSCH) used in the existing LTE are used. This is for convenience of description, and signals, functions, and the like similar to these may be referred to by other names. The above-mentioned terms in NR correspond to NR-SS, NR-PSS, NR-SSS, NR-PBCH, NR-PRACH and the like. However, even a signal used for NR is not necessarily specified as "NR -".

In the embodiment of the present invention, the duplex scheme may be a time division duplex (TDD) scheme, a frequency division duplex (FDD) scheme, or another scheme (for example, flexible duplex).

In the embodiment of the present invention, a radio parameter or the like being "configured" may mean that a predetermined value is preconfigured or that a radio parameter notified from a base station or a terminal is configured.

### (System Configuration)

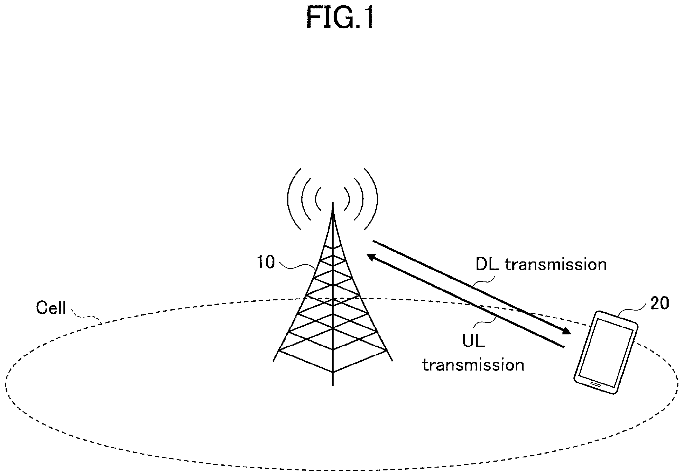

FIG. 1 is a diagram for explaining a radio communication system according to an embodiment of the present invention. As shown in FIG. 1, the radio communication system according to the embodiment of the present invention includes a base station 10 and a terminal 20. Although one base station 10 and one terminal 20 are illustrated in FIG. 1, this is merely an example, and a plurality of base stations 10 and a plurality of terminals 20 may be provided.

The base station 10 is a communication apparatus that provides one or more cells and performs radio communication with the terminal 20. The physical resource of the radio signal is defined in a time domain and a frequency domain, and the time domain is defined by the number of orthogonal frequency division multiplexing (OFDM) symbols. The frequency domain may be defined by the number of subcarriers or the number of resource blocks. In addition, a transmission time interval (TTI) in the time domain may be a slot, or a TTI may be a subframe.

The base station 10 transmits a synchronization signal and system information to the terminal 20. The synchronization signal is, for example, NR-PSS and NR-SSS. The system information is transmitted by, for example, NR-PBCH and is also referred to as broadcast information. The synchronization signal and the system information may be referred to as SSB (SS/PBCH block). As illustrated in FIG. 1, the base station 10 transmits a control signal or data to the terminal 20 in downlink (DL), and receives a control signal or data from the terminal 20 in uplink (UL). Both the base station 10 and the terminal 20 can transmit and receive signals by performing beamforming. In addition, both the base station 10 and the terminal 20 can apply communication by multiple input multiple output (MIMO) in DL or UL. Both the base station 10 and the terminal 20 may perform communication via a secondary cell (SCell) and a primary cell (PCell) by carrier aggregation (CA). Furthermore, the terminal 20 may perform communication via a primary cell of the base station 10 and a primary secondary cell group cell (PSCell:Primary SCG Cell) of another base station 10 by dual connectivity (DC).

The terminal 20 is a communication apparatus having a radio communication function, such as a smartphone, a mobile phone, a tablet, a wearable terminal, and a machine-to-machine (M2M) communication module. As illustrated in FIG. 1, the terminal 20 receives a control signal or data from the base station 10 in DL and transmits a control signal or data to the base station 10 in UL, thereby using various communication services provided by the radio communication system. The terminal 20 receives various reference signals transmitted from the base station 10 and measures the channel quality based on the reception result of the reference signal. The terminal 20 may be referred to as UE, and the base station 10 may be referred to as gNB.

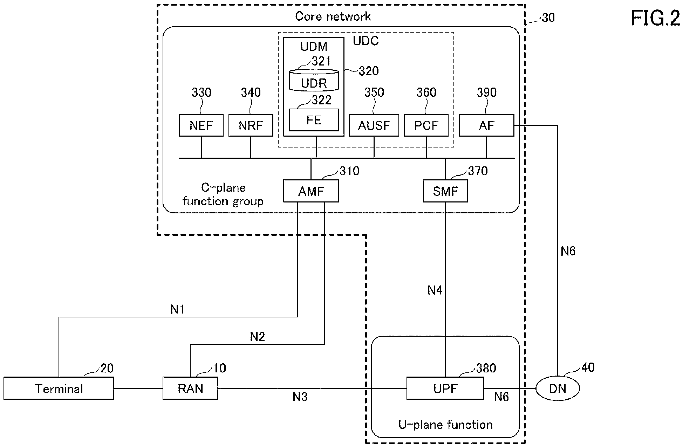

FIG. 2 is a diagram showing an example of a configuration of a radio communication system according to an embodiment of the present invention. The radio communication system includes a RAN 10, the terminal 20, a core network 30, and a data network (DN) 40.

The core network 30 is a network including switches, a subscriber information management apparatus, and the like. The core network 30 includes a network node that realizes a U-Plane function and a network node group that realizes a C-Plane function group.

The U-Plane function is a function of executing a transmission and reception process of user data. The network node that realizes the U-Plane function is, for example, a user plane function (UPF) 380. The UPF 380 is a network node having functions such as a protocol data unit (PDU) session point for interconnection with the DN 40 to the outside, packet routing and forwarding, and quality of service (QoS) handling of the user plane. The UPF 380 controls data transmission and reception between the DN 40 and the terminal 20. The UPF 380 and the DN 40 may be composed of one or more network slices.

The C-Plane function group is a function group that executes a series of control processes for establishing communication and the like. The network node group that realizes the C-Plane function group includes, for example, an access and mobility management function (AMF) 310, a unified data management (UDM) 320, a network exposure function (NEF) 330, a network repository function (NRF) 340, an authentication server function (AUSF) 350, a policy control function (PCF) 360, a session management function (SMF) 370, and an application function (AF) 390.

The AMF 310 is a network node having functions such as termination of a RAN interface, termination of a non-access stratum (NAS), registration management, connection management, reachability management, and mobility management. The NRF 340 is a network node having a capability of discovering a network function (NF) instance that provides a service. The UDM 320 is a network node that manages subscriber data and authentication data. The UDM 320 includes a user data repository (UDR) 321 storing the data and a front end (FE) 322. The FE 322 processes subscriber information.

The SMF 370 is a network node having functions such as session management, IP address assignment and management of the terminal 20, DHCP (Dynamic Host Configuration Protocol) functions, ARP (Address Resolution Protocol) proxy, roaming functions, and the like. The NEF 330 is a network node having a capability of notifying other network functions (NFs) of capabilities and events. The PCF 360 is a network node having a function of performing policy control of the network.

The AF (Application Function) 390 is a network node having a function of controlling an application server.

The AMF 310 and the RAN 10 are communicably connected as an N2 link. Further, the UPF 380 and the RAN 10 are communicably connected as an N3 link. The UPF 380 and the SMF 370 are communicably connected as an N4 link. The UPF 380 and the DN 40 are communicably connected as an N6 link.

Next, examples assumed in the present embodiment will be described. For example, the terminal 20 is a terminal shared by a plurality of users. The terminal 20 may be installed at a street corner. When one of the users approaches the terminal 20, the AF 390 transmits data (application data, etc.) about the user to the terminal 20. Thus, the terminal 20 can perform an operation for the user, for example, displaying information on the area where the terminal 20 is installed in accordance with the preference of the user.

Next, a shared PDU session will be described. One shared PDU session is established for each terminal 20, for one or more terminals 20. A plurality of users share a shared PDU session established for each terminal 20. Here, in the conventional technical specification, when a plurality of users simultaneously approach the terminal 20, data related to the plurality of users is transmitted to the terminal 20. Therefore, in the present embodiment, a mechanism (exclusive control) is realized in which, while one of the users is in proximity to the terminal 20 and data related to the user is being used, the other users are not allowed to use the terminal 20.

To be more specific, the following items are defined for context information of a PDU session held by the SMF 370 and the PCF 360, and information used for SMF registration to the UDM.
- Shared PDU session indication
- PDU session lock state

The shared PDU session indication is information indicating whether or not a PDU session is a session shared by a plurality of users.

The PDU session lock state includes the following information.
- Presence or absence of lock
- Occupancy type

The presence or absence of lock is information indicating either "not locked" or "locked". When the presence or absence of lock indicates "not locked", the information indicating the PDU session lock state is only the presence or absence of lock. On the other hand, when the presence or absence of lock is "locked", the information indicating the PDU session lock state includes information indicating an occupancy type.

The occupation type is information indicating any one of AF session occupation, AF occupation, and AF group occupation.

The AF session occupation is information indicating that an AF session occupies a session (AF session in use).

The AF occupation is information indicating that an AF occupies a session, and includes the AF in use, an AF session in use, an identifier of a user in the AF, and the like. The AF in use is information indicating the AF 390 in use, and is represented by, for example, "afAppId" as in the related art. The identifier of the user in the AF is an identifier for identifying the user in the AF 390, and is represented by, for example, "uid@afAppId". Note that "uid" is a portion for identifying a user, and "@afAppId" is a portion indicating the AF 390.

The identifier indicating the user is managed by the AF 390. Therefore, the user is a concept defined in the AF 390 and is a concept different from the subscriber of the terminal 20. The subscriber of the terminal 20 may be, for example, an operator or the like that provides a function or a service provided in the terminal 20 to the user.

The AF group occupation is information indicating that the group to which the AF 390 belongs occupies a session, and includes an AF group in use, an AF in use, an AF session in use, an identifier in the AF group of the user, and the like. The AF group in use is information indicating a group to which the in-use AF 390 belongs, and is represented by, for example, "afAppGid". The identifier in the AF group of the user is an identifier for identifying the user in the group to which the AF 390 belongs, and is represented by, for example, "uid@afAppGid". Note that "uid" is a portion for identifying the user, and "@afAppGid" is a portion indicating the group to which the AF 390 belongs.

In addition, a shared PDU session accommodating SMF registration event exposure service is introduced in the UDM 320. The shared PDU session accommodating SMF registration event exposure service is a function for exposing (notifying) the occurrence of an event for registering the SMF 370 accommodating a shared PDU session. The UDM 320 notifies the network node that has subscribed to the shared PDU session accommodating SMF registration event exposure service of the occurrence of the event of registering the SMF 370.

In the present embodiment, a PDU session lock request (AF session occupation, AF occupation, AF group occupation), identifiers ("afAppId", "afAppGid") for identifying the AF 390 and a group to which the AF 390 belongs, and identifiers ("uid@afAppId", "uid@afAppGid") for identifying a user are added to input parameters of the conventional AF session establishment request with QoS request. The AF session establishment request with QoS request is a request defined in the conventional technical specification, and is a request for establishing an AF session with QoS request.

Next, a preparation procedure for using the terminal 20 will be described.

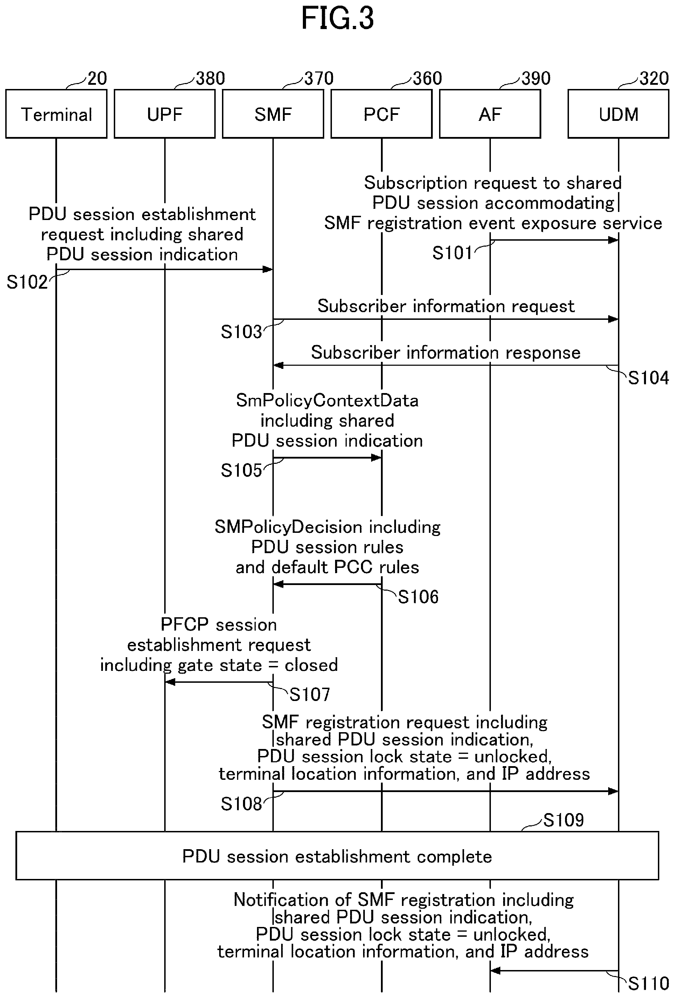

FIG. 3 is a sequence diagram showing an example of a flow of a preparation procedure of the terminal according to the embodiment of the present invention. The following procedure is executed for each AF 390 when there is a plurality of AFs 390. In the following, a first AF 390-1, a second AF 390-2 and a third AF 390-3 are assumed. Although FIG. 3 shows an example of AF 390, in the following description, it is assumed that each of the first AF 390-1, the second AF 390-2, and the third AF 390-3 has executed the preparation procedure.

The AF 390 transmits a subscribe request to the shared PDU session accommodating SMF registration event exposure service to the UDM 320 (step S101). The terminal 20 transmits a PDU session establishment request including a shared PDU session indication to the SMF 370 (step S102).

Subsequently, the SMF370 transmits a request for subscriber information to the UDM 320 (step S103), and receives a response to the subscriber information (step S104).

Next, the SMF 370 transmits "SmPolicyContextData", to the PCF 360, including a shared PDU session indication (step S105). The PCF 360 transmits "SMPolicyDecision" to the SMF 370, including the PDU session rules (shared PDU session indication, PDU session lock state = no lock) and the default PCC rules (gate state = closed) (step S106). Here, the gate state = closed is a configuration in which the PDU session is established but the packet is not passed.

FIG. 3 shows an example of a case where the SMF 370 receives the shared PDU session indication from the terminal 20. Alternatively, the SMF 370 may receive the indication set in the subscriber information from the UDM 320 without receiving the indication from the terminal 20. Further, the SMF 370 may receive the indication set to "SMPolicyDecision" from the PCF 360 without receiving the indication from the terminal 20 or the UDM 320.

In addition, the default PCC rule may be a PCC rule for matching a service data flow with a wild card.

Next, the SMF 370 transmits a PFCP session establishment request, to the UPF 380, including gate state = closed (step S107). The SMF 370 transmits a request for SMF registration to the UDM 320, including a shared PDU session indication, PDU session lock state = no lock, terminal location information, an IP address, etc., for the PDU session (step S108).

Then, the PDU session establishment is completed (step S109). The UDM 320 notifies the AF 390 that the shared PDU session accommodating SMF registration has been performed, the SMF registration including the shared PDU session indication, the PDU session lock state = no lock, the terminal location information, the IP address, and the like.

The AF 390 may be implemented in various forms. For example, the AF 390 may be an application server, an application in a user container, an application in a user terminal, etc.

Next, a procedure for transmitting data of the AF 390 will be described.

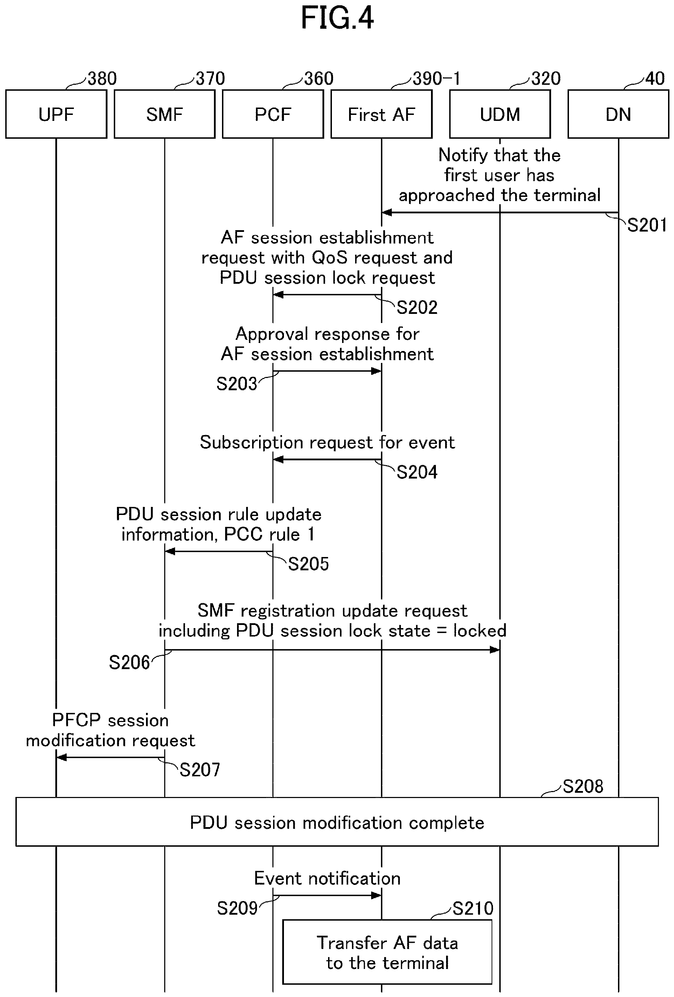

FIG. 4 is a first sequence diagram showing an example of a flow of a data transmission procedure according to the embodiment of the present invention. FIG. 4 shows an example for the first AF 390-1.

The DN 40 notifies the first AF 390-1 that a first user has approached the terminal 20 (step S201). For example, the approach of the user is detected by a sensor included in the DN 40, a computer device connected to the sensor, and the like, and the user is specified as the first user by face authentication or the like. Such a method of notifying of the approach is merely an example, and other methods may be used.

The first AF 390-1 transmits to the PCF 360 an AF session establishment request with QoS requirement with a PDU session lock request, which includes its own identifier (e.g., afAppId = AF1, afAppGid = AFGx), the user's identifier in AF group (uid@afAppGid = abc@AFGx), and the IP address of the PDU session (step S202). In the PDU session lock request, AF group occupation is designated as supplementary information. The supplementary information is specified as any one of AF session occupation, AF occupation, and AF group occupation.

Next, the PCF 360 recognizes that the PDU session is in the (PDU session lock state = no lock), and transmits a response for permitting the AF session establishment request to the first AF 390-1, including the (appSessionId = AF session 1) (step S203).

The first AF 390-1 then requests the PCF 360 to subscribe to the event using (appSessionId = AF session 1) (step S204).

The PCF 360 transmits PDU session rule update information and PCC rule 1 to the SMF 370 (step S205). The PDU session rule update information includes PDU session lock state = locked (AF group occupation (AF group in use = AFGx, AF in use = AF1, AF session in use = AF1: AF session 1, user's identifier in AF group = abc@AFGx)). The PCC rule 1 is a rule that the gate state is set to "open" for the service data flow specified by the first AF 390-1 in the AF session establishment request.

The SMF 370 transmits an SMF registration update request including (PDU session lock state = locked) to the UDM 320 with respect to the PDU session (step S206). The information indicating (PDU session lock state = locked) includes AF group occupation (in-use AF group = AFGx, in-use AF = AF1, in-use AF session = AF1: AF session 1, user's identifier in AF group = abc@AFGx).

Next, the SMF 370 transmits a PFCP session modification request to the UPF 380, including gate state = open for the service data flow specified by the first AF 390-1 (step S207). As described above, exclusive control is performed in the order from the locking to the selective release of the gate.

Then, the PDU session modification is completed (step S208). The PCF 360 transmits an event notification to the first AF 390-1 (step S209). The first AF 390-1 transfers (transmits) the AF data to the terminal 20 (step S210).

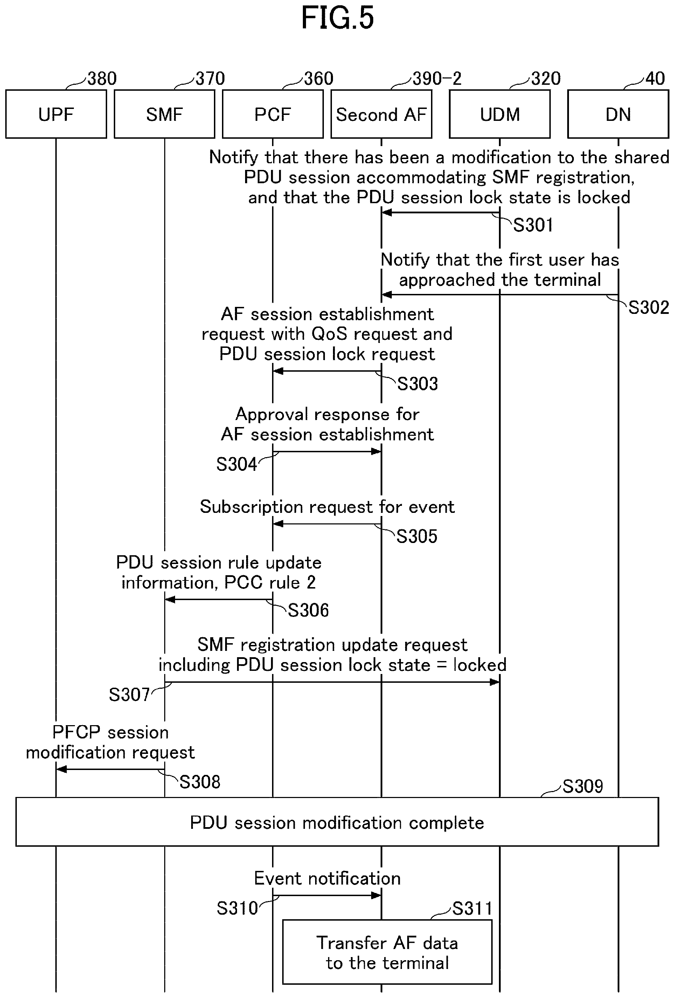

FIG. 5 is a second sequence diagram showing an example of the flow of the data transmission procedure according to the embodiment of the present invention. FIG. 5 shows an example for the second AF 390-2 after the procedure of FIG. 4 has been performed. The second AF 390-2 belongs to the same group (AFGx) as the first AF 390-1.

The UDM 320 notifies the second AF 390-2 of information indicating that registration of the SMF accommodating the shared PDU session has been modified (changed) and (PDU session lock state = locked) (step S301). The information indicating (PDU session lock state = locked) includes AF group occupation (in-use AF group = AFGx, in-use AF = AF1, in-use AF session = AF1: AF session 1, user's identifier in AF group = abc@AFGx).

The DN 40 notifies the second AF 390-2 that the first user has approached the terminal 20 (step S302). For example, the approach of the user is detected by a sensor included in the DN 40, a computer device connected to the sensor, and the like, and the user is specified as the first user by face authentication or the like. Such a method of notifying of the approach is merely an example, and other methods may be used. The second AF 390-2 may determine that the first user has approached the terminal 20 by receiving the notification of step S301.

The second AF 390-2 transmits, to the PCF 360, an AF session establishment request with QoS request with PDU session lock request, which includes its own identifier (e.g., afAppId = AF2, afAppGid = AFGx), the user's identifier in AF group (uid@afAppGid = abc@AFGx), and the IP address of the PDU session (step S303). In the PDU session lock request, AF group occupation is designated as supplementary information.

Next, the PCF 360 recognizes that the PDU session is in the (PDU session lock state = locked), and transmits a response for permitting the AF session establishment request including (appSessionId = AF session 2) to the second AF 390-2 (step S304). The information indicating (PDU session lock state = locked) includes AF group occupation (in-use AF group = AFGx, in-use AF = AF1, in-use AF session = AF1: AF session 1, user's identifier in AF group = abc@AFGx). Here, when the AF group occupation is designated and the AF group occupation of the PDU session is by the designated group, the PCF 360 permits AF session establishment when the same user belonging to the occupying AF group approaches.

The second AF 390-2 then requests the PCF 360 to subscribe to the event using (appSessionId = AF session 2) (step S305).

The PCF 360 transmits PDU session rule update information and PCC rule 2 to the SMF 370 (step S306). The PDU session rule update information includes PDU session lock state = locked (AF group occupation (in-use AF group = AFGx, in-use AF = AF1, AF2, in-use AF session = AF1: AF session 1, AF2: AF session 2, user's identifier in AF group = abc@AFGx)). The PCC rule 2 is a rule that the gate state is set to "open" for the service data flow specified by the second AF 390-2 in the AF session establishment request.

The SMF 370 transmits an SMF registration update request including (PDU session lock state = locked) to the UDM 320 with respect to the PDU session (step S307). The information indicating (PDU session lock state = locked) includes AF group occupation (in-use AF group = AFGx, in-use AF = AF1, AF2, in-use AF session = AF1: AF session 1, AF2: AF session 2, user's identifier in AF group = abc@AFGx).

Next, the SMF 370 transmits a PFCP session modification request to the UPF 380, including gate state = open for the service data flow specified by the second AF 390-2 (step S308).

Then, the PDU session modification is completed (step S309). The PCF 360 transmits an event notification to the second AF 390-2 (step S310). The second AF 390-2 transfers (transmits) AF data to the terminal 20 (step S311).

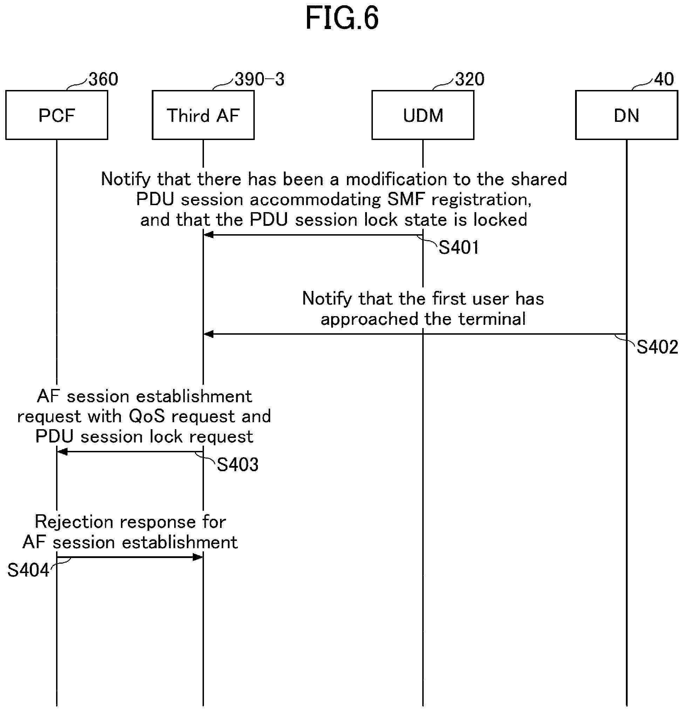

FIG. 6 is a third sequence diagram showing an example of the flow of the data transmission procedure according to the embodiment of the present invention. FIG. 6 shows an example for the third AF 390-3 after the procedure of FIG. 5 has been performed. It is assumed that the third AF 390-3 does not belong to the same group (AFGx) as the first AF 390-1.

The UDM 320 notifies the third AF 390-3 of information indicating that registration of the SMF accommodating the shared PDU session has been modified (changed) and (PDU session lock state = locked) (step S401).

The DN 40 notifies the third AF 390-3 that the first user has approached the terminal 20 (step S402). For example, the approach of the user is detected by a sensor included in the DN 40, a computer device connected to the sensor, and the like, and the user is specified as the first user by face authentication or the like. Such a method of notifying of the approach is merely an example, and other methods may be used.

The third AF 390-3 transmits, to the PCF 360, an AF session establishment request with QoS request with PDU session lock request, which includes its own identifier (e.g., afAppId = AF3, afAppGid = AFGx), the user's identifier in AF group (uid@afAppGid = abc@AFGx), and the IP address of the PDU session (step S403). In the PDU session lock request, AF occupation is specified as supplementary information.

Here, the third AF 390-3 may determine that an AF belonging to another group occupies the shared PDU session from the information indicating (PDU session lock state = locked), and need not transmit the AF session establishment request to the PCF 360. In that case, the data transmission procedure is terminated.

Next, the PCF 360 recognizes that the PDU session is in the (PDU session lock state = locked), and transmits a response to the third AF 390-3 to reject the AF session establishment request (step S404). The information indicating (PDU session lock state = locked) includes AF group occupation (in-use AF group = AFGx, in-use AF = AF1, AF2, in-use AF session = AF1: AF session 1, AF2: AF session 2, user's identifier in AF group = abc@AFGx).

Here, the PCF 360 rejects the AF session establishment if AF occupation is specified and the PDU session is in the AF group occupation (i.e., if the designated occupation type is different from the occupation type of the current occupation). Note that, when the AF group occupation is designated and the AF occupation of the PDU session is by a group different from the designated group, the PCF 360 may reject the AF session establishment.

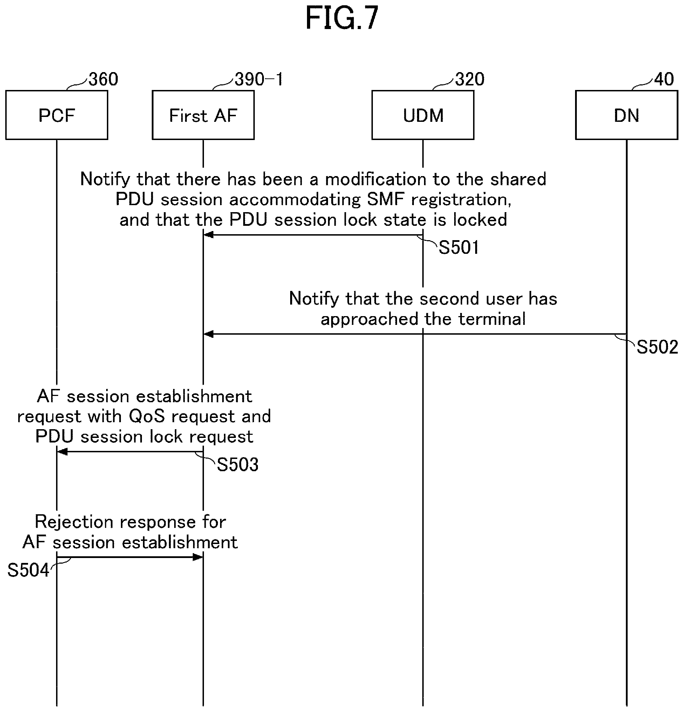

FIG. 7 is a fourth sequence diagram showing an example of a flow of a data transmission procedure according to the embodiment of the present invention. FIG. 7 shows an example of a case where a second user different from the first user approaches the terminal 20 after the procedure of FIG. 5 or 6 is executed.

The UDM 320 notifies the first AF 390-1 of information indicating that registration of the SMF accommodating the shared PDU session has been modified (changed) and (PDU session lock state = locked) (step S501). The information indicating (PDU session lock state = locked) includes AF group occupation (in-use AF group = AFGx, in-use AF = AF1, AF2, in-use AF session = AF1: AF session 1, AF2: AF session 2, user's identifier in AF group = abc@AFGx).

The DN 40 notifies the first AF 390-1 that the second user has approached the terminal 20 (step S502). For example, the approach of the user is detected by a sensor included in the DN 40, a computer device connected to the sensor, and the like, and the user is identified as the second user by face authentication or the like. Such a method of notifying of the approach is merely an example, and other methods may be used.

The first AF 390-1 transmits, to the PCF 360, an AF session establishment request with QoS requirement with a PDU session lock request, which includes its own identifier (e.g., afAppId = AF1, afAppGid = AFGx), the user's identifier in AF group (uid@afAppGid = def@AFGx), and the IP address of the PDU session (step S503). In the PDU session lock request, AF group occupation is designated as supplementary information.

Here, the first AF 390-1 may determine that another user occupies the session from the information indicating (PDU session lock state = locked), and need not transmit the AF session establishment request to the PCF 360. In that case, the data transmission procedure is terminated.

Next, the PCF 360 recognizes that the PDU session is in the (PDU session lock state = locked), and transmits a response to the first A F390-1 to reject the AF session establishment request (step S504). The information indicating (PDU session lock state = locked) includes AF group occupation (in-use AF group = AFGx, in-use AF = AF1, AF2, in-use AF session = AF1: AF session 1, AF2: AF session 2, user's identifier in AF group = abc@AFGx).

Here, when a user different from the occupying user approaches, the PCF 360 rejects the AF session establishment.

Note that, when the AF session occupation is designated and the PDU session in occupation is an AF session different from the designated AF session, the PCF 360 may reject the AF session establishment.

Next, a procedure for ending data transmission will be described.

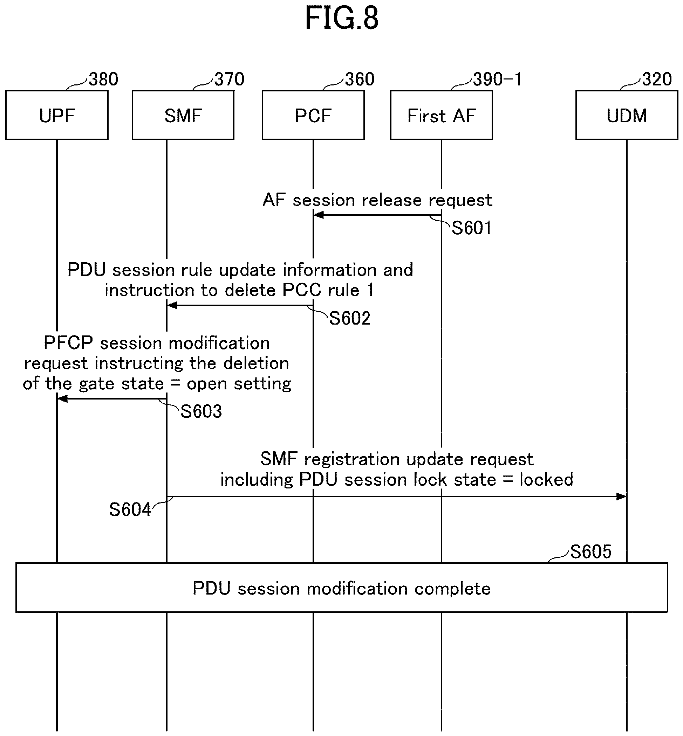

FIG. 8 is a sequence diagram showing an example of the flow of the data transmission end procedure according to the embodiment of the present invention. The first AF 390-1 transmits an AF session release request to the PCF 360 using (appSessionId = AF session 1) (step S601).

The PCF 360 recognizes that the PDU session is in the PDU session lock state = locked. The information indicating the PDU session lock state = locked includes AF group occupation (in-use AF group = AFGx, in-use AF = AF1, AF2, in-use AF session = AF1: AF session 1, AF2: AF session 2, user's identifier in AF group = abc@AFGx).

The PCF 360 transmits PDU session rule update information and deletion instruction of the PCC rule 1 to the SMF 370 (step S602). The PDU session rule update information includes PDU session lock state = locked (AF group occupation (in-use AF group = AFGx, in-use AF = AF2, in-use AF session = AF2: AF session 2, user's identifier in AF group = abc@AFGx)).

The SMF 370 transmits a PFCP session modification request to the UPF 380 (step S603). The PFCP session modification request is a request for instructing deletion of the setting of the gate state = open regarding the service data flow designated by the AF1.

The SMF 370 transmits an SMF registration update request including (PDU session lock state = locked) to the UDM 320 with respect to the PDU session (step S604). The information indicating (PDU session lock state = locked) includes AF group occupation (in-use AF group = AFGx, in-use AF = AF2, in-use AF session = AF2: AF session 2, user's identifier in AF group = abc@AFGx).

As described above, the exclusive control is performed in the order from the closing of the corresponding gate to the change of the occupancy information related to the lock. Then, the PDU session modification is completed (step S605).

Next, a procedure in which the second AF 390-2 terminates data transmission will be described. The second AF 390-2 completes the data transmission by the same procedure as shown in FIG. 8. In particular, in step S601, the second AF 390-2 transmits an AF session release request to the PCF 360 using (appSessionId = AF session 2).

The PCF 360 recognizes that the PDU session is in the PDU session lock state = locked. The information indicating that the PDU session lock state = locked includes AF group occupation (in-use AF group = AFGx, in-use AF = AF2, in-use AF session = AF2: AF session 2, user's identifier in AF group = abc@AFGx).

Next, in step S602, the PCF 360 transmits PDU session rule update information and a deletion instruction of the PCC rule 2 to the SMF 370. The PDU session rule update information includes (PDU session lock state = no lock).

In the following step S603, the SMF 370 transmits a PFCP session modification request to the UPF 380. The PFCP session modification request is a request for instructing deletion of the setting of the gate state = open regarding the service data flow designated by the AF2.

In the subsequent step S604, the SMF 370 transmits an SMF registration update request to the UDM 320 for the PDU session, including (PDU session lock state = no lock).

As described above, the exclusive control is performed in the order from the closing of the gate to the unlocking. Then, in step S605, the PDU session modification is completed.

According to the present embodiment, in a shared PDU session shared by a plurality of users, it is possible to avoid simultaneous use by a plurality of users by performing exclusive control. This makes it possible to realize appropriate exclusive control in a terminal shared by a plurality of users in a radio communication system.

### (Apparatus Configuration)

Next, functional configuration examples of the base station 10, the terminal 20, and various network nodes that perform the processes and operations described above will be described. The base station 10, the terminal 20, and various network nodes include functions for implementing the above-described embodiments. However, the base station 10, the terminal 20, and various network nodes may each include only some of the functions in the embodiments.

### <Base Station 10 and Network Node>

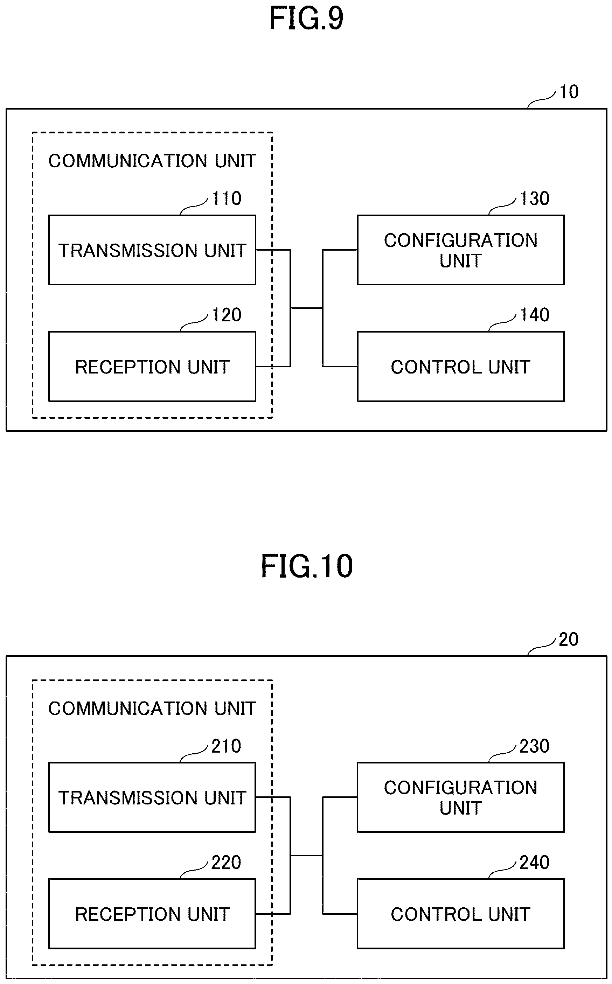

FIG. 9 is a diagram illustrating an example of a functional configuration of the base station 10. As illustrated in FIG. 9, the base station 10 includes a transmission unit 110, a reception unit 120, a configuration unit 130, and a control unit 140. The functional configuration shown in FIG. 9 is merely an example. The functional sections and the names of the functional units may be any as long as the operations according to the embodiment of the present invention can be performed. The network node may have the same functional configuration as the base station 10. Further, the network nodes having a plurality of different functions on the system architecture may be configured by a plurality of network nodes separated for each function.

The transmission unit 110 includes a function of generating a signal to be transmitted to the terminal 20 or another network node and transmitting the signal in a wired or wireless manner. The reception unit 120 includes a function of receiving various signals transmitted from the terminal 20 or another network node and acquiring, for example, information of a higher layer from the received signal.

The configuration unit 130 stores configuration information configured in advance and various kinds of configuration information to be transmitted to the terminal 20 in a storage apparatus, and reads the configuration information from the storage apparatus as necessary. The content of the configuration information is, for example, a configuration related to communication using NTN.

The control unit 140 performs processing related to communication using NTN as described in the embodiment. The control unit 140 performs processing related to communication with the terminal 20. The control unit 140 performs a process related to the verification of the geographical position of the terminal 20. The functional unit related to signal transmission in the control unit 140 may be included in the transmission unit 110, and the functional unit related to signal reception in the control unit 140 may be included in the reception unit 120.

### <Terminal 20>

FIG. 10 is a diagram illustrating an example of a functional configuration of the terminal 20. As illustrated in FIG. 10, the terminal 20 includes a transmission unit 210, a reception unit 220, a configuration unit 230, and a control unit 240. The functional configuration shown in FIG. 10 is merely an example. The functional sections and the names of the functional units may be any as long as the operations according to the embodiment of the present invention can be performed. The USIM mounted on the terminal 20 may include the transmission unit 210, the reception unit 220, the configuration unit 230, and the control unit 240, similarly to the terminal 20.

The transmission unit 210 creates a transmission signal from the transmission data and transmits the transmission signal by radio. The reception unit 220 receives various signals by radio and acquires a signal of a higher layer from the received signal of the physical layer. Also, the reception unit 220 has a function of receiving NR-PSS, NR-SSS, NR-PBCH, DL/UL control signals or reference signals, and so on transmitted from a network node.

The configuration unit 230 stores various kinds of configuration information received from the network node by the receiving unit 220 in the storage apparatus, and reads the configuration information from the storage apparatus as necessary. The configuration unit 230 also stores configuration information configured in advance.

The network node of the present embodiment may be configured as a network node described in each of the following items. The following communication method may be implemented.

### <Configuration related to present embodiment>

### (Item 1)

A network node including:
a reception unit configured to receive, when a PDU session is established, a request of subscription to a function for notifying of occurrence of an event that registers a network node accommodating the PDU session, from another network mode; and
a transmission unit configured to transmit a notification indicating occurrence of the event to the other network node, when the event that registers a network node accommodating the PDU session occurs.

### (Item 2)

The network node as described in item 1,
wherein, when the other network node is a network node that controls an application, the transmission unit transmits, to the other network node that controls an application, information indicating whether or not the PDU session is occupied by a network node, that controls an application, different from the other network node that controls an application.

### (Item 3)

The network node as described in item 1,
wherein, when the other network node is a network node that controls an application, the transmission unit transmits, to the other network node that controls an application, information indicating whether or not the PDU session is occupied by a network node, that controls an application, belonging to a group different from a group that the other network node that controls an application belongs to.

### (Item 4)

A communication method executed by a network node, the communication method including:
receiving, when a PDU session is established, a request of subscription to a function for notifying of occurrence of an event that registers a network node accommodating the PDU session, from another network mode; and
transmitting a notification indicating occurrence of the event to the other network node, when the event that registers a network node accommodating the PDU session occurs.

Any of the above configurations provides a technique that enables appropriate exclusive control to be realized in a terminal shared by a plurality of users in a radio communication system. According to item 1, when an event of registering a network node accommodating a PDU session occurs, a notification indicating the occurrence of the event can be transmitted to another network node. According to item 2, it is possible to transmit information indicating whether or not a PDU session is occupied by a network node, that controls an application, different from the other network node that controls an application, to the other network node that controls an application. According to item 3, it is possible to transmit information indicating whether or not a PDU session is occupied by a network node that controls an application belonging to a group different from a group to which the other network node that controls an application belongs, to the other network node that controls an application.

### (Hardware Configuration)

The block diagrams (FIGs. 9 and 10) used in the description of the embodiment described above illustrate the blocks of functional units. Such functional blocks (configuration parts) are attained by at least one selectable combination of hardware and software. In addition, an attainment method of each of the function blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions to transmit is referred to as a transmitting unit or a transmitter. As described above, the attainment method thereof is not particularly limited.

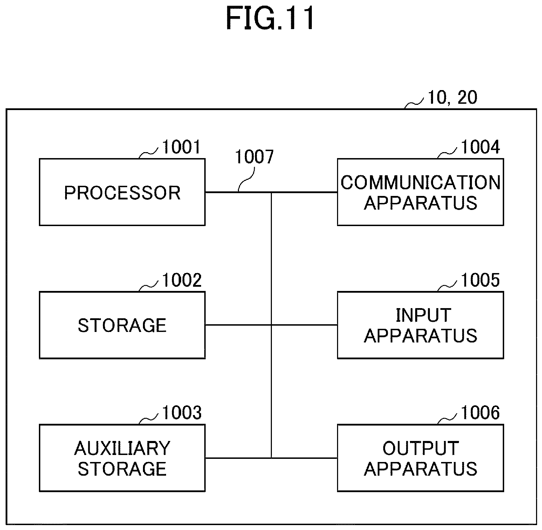

For example, the network node, the terminal 20, and the like in one embodiment of this disclosure may function as a computer for performing the processing of a radio communication method of this disclosure. FIG. 11 is a diagram illustrating an example of a hardware configuration of the base station 10 and the terminal 20 according to one embodiment of this disclosure. The network node may have a hardware configuration similar to that of the base station 10. The USIM may have the same hardware configuration as the terminal 20. The base station 10 and the terminal 20 described above may be physically configured as a computer apparatus including a processor 1001, a storage 1002, an auxiliary storage 1003, a communication apparatus 1004, an input apparatus 1005, an output apparatus 1006, a bus 1007, and the like.

Note that, in the following description, the word "apparatus" can be replaced with a circuit, a device, a unit, or the like. The hardware configuration of the base station 10 and the terminal 20 may be configured to include one or a plurality of apparatuses illustrated in the drawings, or may be configured not to include a part of the apparatuses.

Each function of the base station 10 and the terminal 20 is attained by reading predetermined software (a program) on hardware such as the processor 1001 and the storage 1002 such that the processor 1001 performs an operation, and by controlling the communication of the communication apparatus 1004 or by controlling at least one of reading and writing of data in the storage 1002 and the auxiliary storage 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage 1002 from at least one of the auxiliary storage 1003 and the communication apparatus 1004, and thus, executes various processing. A program for allowing a computer to execute at least a part of the operation described in the embodiment described above is used as the program. The control unit 140 of the base station 10 shown in FIG. 9 may be attained by a control program that is stored in the storage 1002 and is operated by the processor 1001. Also, for example, the control unit 240 of the terminal 20 shown in FIG. 10 may be attained by a control program that is stored in the storage 1002 and is operated by the processor 1001. It has been described that the various types of processing described above are executed by one processor 1001, but the various types of processing may be simultaneously or sequentially executed by two or more processors 1001. The processor 1001 may be mounted on one or more chips. Note that, the program may be transmitted from a network through an electric communication line.

The storage 1002 is a computer readable recording medium, and for example, may be configured of at least one of a read only memory (ROM), an erasable programmable ROM (EPROM), an electrically erasable programmable ROM (EEPROM), a random access memory (RAM), or the like. The storage 1002 may be referred to as a register, a cache, a main memory (a main storage unit), and the like. The storage 1002 is capable of retaining a program (a program code), a software module, and the like that can be executed in order to implement a communication method according to one embodiment of this disclosure.

The auxiliary storage 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disc), a smart card, a flash memory (for example, a card, a stick, a key drive), a floppy (Registered Trademark) disk, a magnetic strip, or the like. The storage medium described above, for example, may be a database including at least one of the storage device 1002 and the auxiliary storage device 1003, a server, or a suitable medium.

The communication apparatus 1004 is hardware (a transmitting and receiving device) for performing communication with respect to the computer through at least one of a wire network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication apparatus 1004. In the transmitting and receiving unit, the transmitting unit and the receiving unit may be mounted while being physically or logically separated.

The input apparatus 1005 is an input device for receiving input from the outside (for example, a keyboard, a mouse, a microphone, a switch, a button, a sensor, and the like). The output apparatus 1006 is an output device for implementing output with respect to the outside (for example, a display, a speaker, an LED lamp, and the like). Note that the input apparatus 1005 and the output apparatus 1006 may be integrally configured (for example, a touch panel).

In addition, each of the apparatuses such as the processor 1001 and the storage 1002 may be connected by the bus 1007 for performing communication with respect to information. The bus 1007 may be configured by using a single bus, or may be configured by using different buses for each of the apparatuses.

In addition, the base station 10 and the terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be implemented by using at least one piece of hardware.

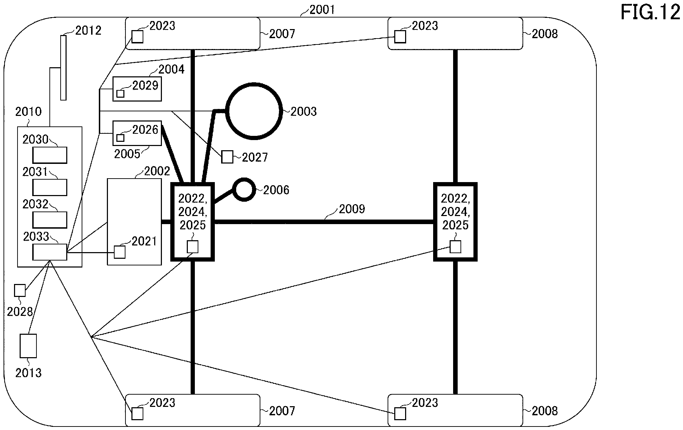

FIG. 12 shows a configuration example of a vehicle 2001 according to the present embodiment. As shown in FIG. 12, the vehicle 2001 includes a drive unit 2002, a steering unit 2003, an accelerator pedal 2004, a brake pedal 2005, a shift lever 2006, front wheels 2007, rear wheels 2008, an axle 2009, an electronic control unit 2010, various sensors 2021-2029, an information service unit 2012, and a communication module 2013. Each aspect/embodiment described in the present disclosure may be applied to a communication apparatus mounted on the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheels or the rear wheels, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic Control Unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, an accelerator pedal depression signal acquired by an accelerator pedal sensor 2029, a brake pedal depression signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

The information service unit 2012 may include an input device (for example, a keyboard, a mouse, a microphone, a switch, a button, a sensor, a touch panel, or the like) that receives an input from the outside, and may include an output device (for example, a display, a speaker, an LED lamp, a touch panel, or the like) that performs an output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via the communication port 2033, to and from the drive unit 2002, the steering unit 2003, the accelerator pedal 2004, the brake pedal 2005, the shift lever 2006, the front wheels 2007, the rear wheels 2008, the axle 2009, the microprocessor 2031 and the memory (ROM, RAM) 2032 in the electronic control unit 2010, and sensors 2021-2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2028 described above input to the electronic control unit 2010, information obtained based on the signals, or information based on input from the outside (user) obtained via the information service unit 2012 to an external device via radio communication. The electronic control unit 2010, the various sensors 2021 to 2028, the information service unit 2012, and the like may be referred to as an input unit that receives an input. For example, PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to a device such as a display or a speaker based on PDSCH (or data/information decoded from the PDSCH) received by the communication module 2013).

In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheels 2007, the rear wheels 2008, the axle 2009, the sensors 2021-2029, etc., mounted in the vehicle 2001.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station 10 and the terminal 20 have been described by using a functional block diagram, but such an apparatus may be attained by hardware, software, or a combination thereof. Each of software that is operated by a processor of the base station 10 according to the embodiment of the invention and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiment described in this disclosure may be applied to a system using long term evolution (LTE), LTE-advanced (LTE-A), SUPER 3G, IMT-advanced, a 4th generation mobile communication system (4G), a 5th generation mobile communication system (5G), a 6th generation mobile communication system (6G), an xth generation mobile communication system (xG) (x is an integer or a decimal for example), future radio access (FRA), new radio (NR), New radio access (NX), Future generation radio access (FX), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded, modified, created, or defined on the basis thereof. In addition, a combination of a plurality of systems (for example, a combination of 5G and at least one of LTE and LTE-A, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station 10 may be performed by an upper node, in accordance with a case. In a network provided with one or a plurality of network nodes including the base station 10, it is obvious that various operations that are performed in order for communication with respect to the terminal 20 can be performed by at least one of the base station 10 and network nodes other than the base station 10 (for example, MME, S-GW, or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), and at least one of the wire technology and the radio technology is included in the definition of the transmission medium.

The information, the signal, and the like described in this disclosure may be represented by using any of various different technologies. For example, the data, the command, the information, the signal, the bit, the symbol, the chip, and the like that can be referred to through the entire description above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding piece of information. For example, a radio resource may be indicated by an index.

The names used in the parameters described above are not a limited name in any respect. Further, expressions or the like using such parameters may be different from those explicitly disclosed in this disclosure. Various channels (for example, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In the present disclosure, the transmission of information from the base station to the terminal may be read as the base station instructing the terminal to perform control and operation based on the information.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other suitable terms, by a person skilled in the art.

At least one of the base station and the mobile station may be referred to as a transmission device, a reception device, a communication device, or the like. At least one of the base station and the mobile station may be a device mounted on a mobile object, the mobile object itself, or the like. The mobile object is a movable object, and the moving speed is arbitrary. The moving object may be stopped. Examples of the moving object include, but are not limited to, vehicles, transportation vehicles, automobiles, motorcycles, bicycles, connected cars, excavators, bulldozers, wheel loaders, dump trucks, forklifts, trains, buses, rear cars, rickshaws, ships and other watercraft, airplanes, rockets, artificial satellites, drones, multicopters, quadcopters, balloons, and objects mounted thereon. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station in this disclosure may be replaced with the terminal. For example, each aspect/embodiment of this disclosure may be applied to a configuration in which communication between the base station and the user terminal is replaced with communication in a plurality of terminals 20 (for example, may be referred to as device-to-device (D2D), vehicle-to-everything (V2X), and the like). In this case, the function of the base station 10 described above may be provided in the terminal 20. In addition, the words "uplink", "downlink", and the like may be replaced with words corresponding to the communication between the terminals (for example, "side"). For example, an uplink channel, a downlink channel, and the like may be replaced with a side channel.

Similarly, the user terminal in this disclosure may be replaced with the base station. In this case, the function of the user terminal described above may be provided in the base station.

The terms "determining" used in this disclosure may involve diverse operations. "Determining", for example, may include deeming judging, calculating, computing, processing, deriving, investigating, looking up (search, inquiry) (for example, looking up in a table, a database, or another data structure), and ascertaining, as "determining". In addition, "determining" may include deeming receiving (for example, receiving information), transmitting (for example, transmitting information), input, output, and accessing (for example, accessing data in a memory), as "determining". In addition, "determining" may include deeming resolving, selecting, choosing, establishing, comparing, and the like as "determining". That is, "determining" may include deeming an operation as "determining". In addition, "determining" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some non-limiting and non-inclusive examples, by using electromagnetic energy having a wavelength of a radio frequency domain, a microwave domain, and an optical (visible and invisible) domain, and the like.

The reference signal can also be abbreviated as RS, and may be referred to as a pilot based on a standard to be applied.

The description "based on" that is used in this disclosure does not indicate only "based on only", unless otherwise specified. In other words, the description "based on" indicates both "based on only" and "based on at least".

Any reference to elements using the designations "first," "second," and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or that the first element necessarily precedes the second element in any manner.

"Means" in the configuration of each of the apparatuses described above may be replaced with "unit", "circuit", "device", and the like.

In this disclosure, in a case where "include", "including", and modifications thereof are used, such terms are intended to be inclusive, as with the term "comprising". Further, the term "or" that is used in this disclosure is not intended to be exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time units greater than the mini slot may be referred to as a PDSCH (or PUSCH) mapping type A**.** PDSCH (or PUSCH) to be transmitted by using the mini slot may be referred to as a PDSCH (or PUSCH) mapping type B.

All of the radio frame, the subframe, the slot, the mini slot, and the symbol represent time units at the time of transmitting a signal. Other names respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, a unit representing TTI may be referred to as a slot, a mini slot, and the like, but not a subframe.

Here, TTI, for example, indicates a minimum time unit of scheduling in radio communication. For example, in an LTE system, the base station performs scheduling for allocating a radio resource (a frequency bandwidth, transmission power, and the like that can be used in each of the terminals 20) in TTI units, with respect to each of the terminals 20. Note that, the definition of TTI is not limited thereto.

TTI may be a transmission time unit of a data packet (a transport block), a code block, a codeword, and the like that are subjected to channel coding, or may be processing unit of scheduling, link adaptation, and the like. Note that, when TTI is applied, a time section (for example, the number of symbols) in which the transport block, the code block, the codeword, and the like are actually mapped may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a normal TTI (TTI in LTE Rel.8-12), a normal TTI, a long TTI, a normal subframe, a normal subframe, a long subframe, a slot, and the like. TTI shorter than the normal TTI may be referred to as a shortened TTI, a short TTI, a partial TTI (or a fractional TTI), a shortened subframe, a short subframe, a mini slot, a subslot, a slot, and the like.

Note that, the long TTI (for example, the normal TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is a resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined based on the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that one or a plurality of RBs may be referred to as a physical resource block (physical RB: PRB), a sub-carrier group (SCG), a resource element group (REG), a PRB pair, an RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In the terminal 20, one or a plurality of BWPs may be configured within one carrier.

At least one of the configured BWPs may be active, and it need not be assumed that the terminal 20 transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as "a", "an", and "the" are added by translation, this disclosure may include a case where nouns following the articles are plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and modified without departing from the spirit and scope of this disclosure defined by the description of the claims. Therefore, the description in this disclosure is for illustrative purposes and does not have any limiting meaning with respect to this disclosure.

### Description of Symbols

- 10: base station (RAN)
- 110: transmission unit
- 120: reception unit
- 130: configuration unit
- 140: control unit
- 20: terminal
- 30: core network
- 40: DN
- 210: transmission unit
- 220: reception unit
- 230: configuration unit
- 240: control unit
- 310: AMF
- 320: UDM
- 330: NEF
- 340: NRF
- 350: AUSF
- 360: PCF
- 370: SMF
- 380: UPF
- 390: AF
- 1001: processor
- 1002: storage
- 1003: auxiliary storage
- 1004: communication apparatus
- 1005: input apparatus
- 1006: output apparatus
- 2001: vehicle
- 2002: drive unit
- 2003: steering unit
- 2004: accelerator pedal
- 2005: brake pedal
- 2006: shift lever
- 2007: front wheels
- 2008: rear wheels
- 2009: axle
- 2010: electronic control unit
- 2012: information service unit
- 2013: communication module
- 2021: current sensor
- 2022: revolution sensor
- 2023: pneumatic sensor
- 2024: vehicle speed sensor
- 2025: acceleration sensor
- 2026: brake pedal sensor
- 2027: shift lever sensor
- 2028: object detection sensor
- 2029: accelerator pedal sensor
- 2030: driving support system unit
- 2031: microprocessor
- 2032: memory (ROM, RAM)
- 2033: communication port (IO port)

## Claims

1. A network node comprising:
a reception unit configured to receive, when a PDU session is established, a request of subscription to a function for notifying of occurrence of an event that registers a network node accommodating the PDU session, from another network mode; and
a transmission unit configured to transmit a notification indicating occurrence of the event to the other network node, when the event that registers a network node accommodating the PDU session occurs.

2. The network node as claimed in claim 1**,**
wherein, when the other network node is a network node that controls an application, the transmission unit transmits, to the other network node that controls an application, information indicating whether or not the PDU session is occupied by a network node, that controls an application, different from the other network node that controls an application.

3. The network node as claimed in claim 1**,**
wherein, when the other network node is a network node that controls an application, the transmission unit transmits, to the other network node that controls an application, information indicating whether or not the PDU session is occupied by a network node, that controls an application, belonging to a group different from a group that the other network node that controls an application belongs to.

4. A communication method executed by a network node, the communication method comprising:
receiving, when a PDU session is established, a request of subscription to a function for notifying of occurrence of an event that registers a network node accommodating the PDU session, from another network mode; and
transmitting a notification indicating occurrence of the event to the other network node, when the event that registers a network node accommodating the PDU session occurs.
